# EUROPÄISCHE PATENTSCHRIFT

(11) **EP 0 948 202 B1**
(45) Veröffentlichungstag und Bekanntmachung des Hinweises auf die Patenterteilung: **23.05.2007**
(21) Anmeldenummer: 99200926.6
(22) Anmeldetag: 25.03.1999
(51) Int. Cl.: H04N 5/455

(54) **Schaltungsanordnung zur Demodulation eines Zwischenfrequenz-Videosignals**
Demodulator circuit for video signals at intermediate frequency
Circuit démodulateur pour un signal vidéo à fréquence intermédiaire

(30) Priorität: 02.04.1998 DE 19814806
(43) Veröffentlichungstag der Anmeldung: 06.10.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Hafemeister, Thomas, 22335 Hamburg (DE)
(74) Vertreter: von Laue, Hanns-Ulrich

(56) Entgegenhaltungen:
- US-A- 4 853 641
- US-A- 4 933 767
- US-A- 5 648 823

## Beschreibung

Die Erfindung betrifft eine Schaltungsanordnung zur Demodulation eines unter Einsatz einer Nyquist-Flanke generierten Zwischenfrequenz-Videosignals mit einem einen Phasendetektor, ein Schleifenfilter und einen spannungsgesteuerten Oszillator aufweisenden Phasenregelkreis und einem Video-Demodulator, wobei das Zwischenfrequenz-Videosignal dem Phasendetektor zugeführt wird und das Ausgangssignal des Phasenregelkreises dem Videodemodulator zugeführt wird, welcher das Zwischenfrequenz-Videosignal in ein Basisband-Videosignal umsetzt. Dabei liegt das Basisband-Videosignal gegenüber dem Zwischenfrequenz-Videosignal in invertierter Form vor.

Derartige Schaltungsanordnungen sind üblich zur Demodulation eines Zwischenfrequenz-Videosignals, d.h. also zur Umsetzung eines Videosignals vom Zwischenfrequenzbereich, in dem es amplitudenmoduliert einem Träger mit der Zwischenfrequenz aufmoduliert ist, auf das Basisband. Das Zwischenfrequenz-Videosignal wurde zuvor aus einem Hochfrequenzgemisch rausgefiltert, wobei eine Nyquist-Flanke eingesetzt wird, welche zur Folge hat, dass in ihrem Bereich die Seitenbänder des Videosignals unterschiedlich stark verstärkt werden. Je nach Amplitude des Videosignals und damit auch des Trägers tritt durch diesen Effekt eine Phasenmodulation ein. Es findet also eine Art Umwandlung einer Amplitudenmodulation in eine Phasenmodulation statt. Die Phasenmodulation bedeutet, dass in dem Zwischenfrequenz-Videosignal der Träger mit der Zwischenfrequenz phasenmoduliert ist. Der Phasenregelkreis seinerseits folgt dieser Phasenmodulation, so dass das dem Videodemodulator zur Demodulation zugeführte Signal ebenfalls phasenmoduliert ist. Dies wiederum führt bei der Demodulation dazu, dass die Linearität des Videosignals beeinträchtigt wird.

Aus der US-A-4 853 641 ist ein Video Demodulationssystem bekannt, bei dem eine Kompensation von durch eine Limiterschaltung hervorgerufene Phasenfehlern vorgesehen ist. Außerdem ist eine auch eine Kompensation der durch das ZF-Filter hervorgerufenen Phasenfehler erwähnt. Dabei wird eine kombinierte resistive und kapazitive Rückkopplung über zwei Stränge auf zwei differentielle Ausgänge eines Multiplizierers vorgenommen. Die gewünschte Kompensation kann dabei wegen der nachfolgenden Summenbildung jedoch nur bei bestimmten Dimensionierungen der Kapazitäten gelingen, die jedoch nicht offenbart sind. Ferner tritt das Problem ein, dass die kapazitive Rückkopplung im nicht gerasteten Zustand ohne Schalter oder steuerbare Dämpfung hohe Signalströme auf den Phasendetektor zurückführt. Diese hohen Ströme überlagern sich den Signalen am Videodemodulatorausgang, welcher im nicht gerasteten Zustand hohe Signalamplituden mit Frequenzen außerhalb des gewünschten Frequenzbereichs zur Kompensation erzeugt. Diese unerwünschten Signalkomponenten mit hohen Amplituden überlagern sich den gewünschten und zum Einrasten benötigten Signalen des Phasendetektors. Erschwerend kommt hinzu, dass diese unerwünschten Signalkomponenten durchweg gegenphasig sind und damit den Einrastvorgang behindern (oder sogar verhindern) könnten.

Es ist Aufgabe der Erfindung, eine derartige Schaltungsanordnung dahingehend weiterzuentwickeln, dass eine Phasenmodulation in dem Ausgangssignal des Phasenregelkreises unterdrückt wird und dass das Störverhalten der Schaltungsanordnung sowohl im Anlauf wie auch im Betrieb zu verbessert wird.

Diese Aufgabe ist erfindungsgemäß durch die Merkmale des Anspruchs 1 gelöst.

Dem Phasenkomparator in dem Phasenregelkreis wird einerseits das Zwischenfrequenz-Videosignal und andererseits das Ausgangssignal des spannungsgesteuerten Oszillators des Phasenregelkreises zugeführt. Der Phasenkomparator liefert ausgangsseitig ein Steuersignal, welches über das Schleifenfilter zu einem Steuereingang des spannungsgesteuerten Oszillators gelangt. Voraussetzung für die einwandfreie Arbeitsweise der erfindungsgemäßen Schaltungsanordnung ist, dass der Phasenkomparator im Aussteuerungsbereich des Zwischenfrequenz-Videosignals modulationsunabhängig arbeitet, d.h. das sein Ausgangssignal tatsächlich nur von den Phasenbeziehungen der beiden Eingangssignale und nicht von deren Modulation bzw. Amplitude abhängig ist.

Der spannungsgesteuerte Oszillator und damit der Phasenregelkreis liefern ausgangsseitig ein im Idealfall sinusförmiges Signal, welches dem Videodemodulator zur Demodulation des diesem zugeführten Zwischenfrequenz-Videosignals eingesetzt wird. Der Video-demodulator liefert ausgangsseitig das Basisband-Videosignal. Bei vielen bekannten Videodemodulatoren liegt dieses Signal in gegenüber dem Zwischenfrequenz-Videosignal invertierter Form vor. Dieses in invertierter Form vorliegende Basisband-Videosignal muss in der erfindungsgemäßen Schaltungsanordnung entweder durch einen derartig konstruierten Videodemodulator oder durch einen hinter dem Videodemodulator vorgesehenen Inverter erzeugt werden.

Das derartig erzeugte Basisband-Videosignal wird mittels wenigstens eines Rückführungskondensators auf das Schleifenfilter zurückgekoppelt. Es wird mittels dieses Rückführungskondensators ein Korrektursignal gebildet, das in dem Zwischenfrequenz-Videosignal enthaltene Signalanteile, die durch die Generierung des Zwischenfrequenz-Videosignals mittels einer Nyquist-Flanke entstanden sind, kompensiert. Diese Signalanteile sind in dem Korrektursignal mit entgegengesetzter Amplitude und Phasenlage enthalten, so dass sie sich in dem Schleifenfilter mit den entsprechenden Störungen kompensieren.

Trotz des relativ einfachen Aufbaues gelingt diese Kompensation mittels der Rückführung über den Rückführungskondensator, da die oben erläuterten Störungen in dem Basisband-Videosignal in geeigneter Phasenlage vorliegen, welche wiederum durch den Rückführungskondensator so verschoben wird, dass eine Kompensation der entsprechenden Signalanteile eintritt.

Dass diese Kompensation tatsächlich eintritt, lässt sich anhand eines Beispieles nachvollziehen:

Wird in die Schaltungsanordnung beispielsweise ein Zwischenfrequenz-Bildsignal eingespeist, dessen Bildinhalt die Form eines Kosinus aufweist, innerhalb dessen sich also der Kontrast des Bildinhaltes über eine Bildzeile kosinusförmig verändert, so ist der Bildträger in dem Zwischenfrequenz-Videosignal entsprechend kosinusförmig moduliert. Da dieses Zwischenfrequenz-Videosignal mittels einer Nyquist-Flanke aus einem Hochfrequenzgemisch herausgefiltert wurde, enthält der Bildträger jedoch eine Phasenmodulation. Diese ist dadurch entstanden, dass im Bereich der Nyquist-Flanke die Seitenbänder des Videosignals unterschiedlich stark verstärkt werden. Schwankt die Amplitude des Bildträgers, so tritt durch diese unterschiedlich starke Verstärkung der Seitenbänder eine Phasenmodulation ein. Es findet also quasi eine Umwandlung einer Amplitudenmodulation in eine Phasenmodulation statt.

In dem oben genannten Beispiel, in dem das Bildsignal kosinusförmig moduliert ist, ist die Grundwelle dieser Phasenmodulation sinusförmig (um 90° phasenverschoben). Neben dieser Grundwelle sind weitere Phasenmodulationskomponenten vorhanden, die jedoch bei der weiteren Verarbeitung des Signals nicht ins Gewicht fallen. Das Zwischenfrequenzsignal mit der sinusförmigen Phasenmodulation des Trägers wird einem Eingang des Phasendetektors zugeführt. Da das Ausgangssignal des Phasendetektors nach Definition näherungsweise proportional zur Phasenmodulation des Eingangssignals ist, ist das Steuersignal am Ausgang des Phasendetektors ebenfalls zum kosinusförmigen Bildsignal um 90° phasenverschoben. Entscheidend ist jedoch, dass das Ausgangssignal des Phasendetektors Phasenmodulationsstörungen enthält, die durch die oben beschriebene Phasenmodulation des Zwischenfrequenz-Bildträgers entstehen. Durch die Phasenverschiebung sind jedoch diese Störanteile in dem Steuersignal des Phasendetektors nunmehr sinusförmig, sind also gegenüber der kosinusförmigen Phasenmodulation des Grundträgers phasenverschoben.

Infolge dieser Phasenstörungen liefert der Phasendetektor also ein mit einer sinusförmigen Grundwelle schwankendes Signal, mit dem der VCO nachgeregelt wird. Dies ist an sich unerwünscht, da der VCO auf einer konstanten Frequenz arbeiten sollte, damit bei der Videodemodulation das Videosignal linear demoduliert werden kann. Der Video-demodulator demoduliert das Zwischenfrequenz-Videosignal, das in diesem Beispielsfalle den kosinusförmigen Bildinhalt aufweist. Viele bekannte Videodemodulatoren liefern dieses Signal als Basisbandsignal gegenüber dem Zwischenfrequenz-Videosignal in invertierter Form, so dass der Bildinhalt hier minus kosinusförmig ist. Sollte dies nicht der Fall sein, muss dem Demodulator ein Inverter nachgeschaltet werden. In jedem Falle steht nunmehr ein Bildsignal in Basisbandlage zur Verfügung, das minus kosinusförmigen Verlauf hat. Durch die Phasenmodulation des Steuersignals des VCO's und damit auch dessen Ausgangssignal sind in jedem Signal Oberwellen enthalten, die für die weitere erfindungsgemäße Verarbeitung zur Rückkopplung jedoch nicht stören.

Das invertierte Basisbandsignal wird nämlich erfindungsgemäß über einen Kondensator auf das Schleifenfilter des Phasenregelkreises rückgekoppelt. Durch diesen Kondensator findet eine 90° Phasenverschiebung statt, so dass das Signal am Einkoppelpunkt in das Schleifenfilter einen minus sinusförmigen Verlauf hat und damit genau die entgegen gesetzte Phasenlage gegenüber der Phasenstörung am Ausgang des Phasendetektors, die einen plus sinusförmigen Verlauf und Phasenlage hat. Bei dem Schleifenfilter überlagern sich diese beiden Signale somit phasenrichtig und gegebenenfalls auch mit ähnlicher Amplitude, so dass im Idealfall eine Kompensation der oben erläuterten Phasenschwankungen am Ausgang des Phasendetektors bzw. am Eingang des Schleifenfilters stattfindet. Damit erhält der VCO ein konstantes Signal, das die durch die oben beschriebene Phasenmodulation enthaltenen Störungen nicht mehr enthält, so dass der VCO seinerseits in gewünschter Weise ein konstantes Signal mit konstanter Frequenz liefert.

Zusammenfassend ist festzustellen, dass durch die Rückführung des Basisband-Videosignals ein Korrektursignal abgeleitet wird, welches in bezug auf Phase und Amplitude den Phasenschwankungen dem Ausgangssignal des Phasendetektors entgegengesetzt ist. Es handelt sich dabei um die Phasenschwankungen, die durch die Phasenmodulation des Zwischenfrequenz-Videosignals entstehen.

Ein wesentlicher Vorteil der erfindungsgemäßen Schaltungsanordnung ist neben ihres einfachen Aufbaus die Tatsache, dass die Bandbreite der PLL relativ groß ausgelegt sein kann, ohne zu entsprechenden Störungen in dem Videosignal zu führen. Dies gelingt, da die oben beschriebenen Phasenstörungen in dem Zwischenfrequenz-Videosignal nicht zu entsprechenden Phasenstörungen des VCO des Phasenregelkreises führen. Dadurch treten auch bei relativ großer Bandbreite des Phasenregelkreises keine Störungen in dem Bildsignal bzw. einem zusammen mit dem Bildsignal übertragenden Tonsignal auf. Mit der erfindungsgemäßen Schaltungsanordnung gelingt eine ständige Kompensation von in dem Videosignal auftretenden Phasenstörungen. Die relativ große mögliche Bandbreite der PLL, die durch die erfindungsgemäße Schaltungsanordnung ermöglicht wird, gestattet eine störungsfreie Verarbeitung von frequenzinstabilen Bildträgersignalen.

Der ferner vorgesehene Dämpfungskondensator ist gegen ein Bezugspotential geschaltet. Der Rückkopplungskondensator lässt den Strom, der durch ihn fließt, zu hohen Frequenzen hin ansteigen. Dies ist grundsätzlich wünschenswert, da die Phasenmodulation am Ausgang des Phasendetektors ebenfalls zu hohen Frequenzen hin ansteigt. Bei zunehmender Modulation des Zwischenfrequenz-Videosignals und bei Erreichen der Grenzen der Nyquist-Flanken nehmen jedoch die oben erläuterten Phasenstörungen nicht mehr weiter zu; vielmehr bleiben sie bei weiter zunehmender Amplitude etwa konstant. Um diesem Umstand Rechnung zu tragen, ist der Dämpfungskondensator vorgesehen, der den Strom, den der Rückkopplungskondensator liefert, mit ansteigender Frequenz zunehmend gegen Bezugspotential geschaltet. Damit wird erreicht, dass der Anstieg des Kompensationsstromes zu höheren Frequenzen hin durch den Dämpfungskondensator kompensiert wird. Dies wiederum hat zur Folge, dass die Amplitude des Kompensationssignals, das in das Schleifenfilter eingespeist wird, etwa den gleichen Frequenzverlauf hat, wie die Grundwelle der durch die oben beschriebene Phasenmodulation auftretenden Störanregung am Ausgang des Phasendetektors. Damit wird eine optimale Kompensation dieser Störanregung erzielt.

Ferner wird dadurch, dass das Korrektursignal ausschließlich während solcher Zeiten mittels eines elektronischen Schalters auf das Schleifenfilter gekoppelt wird, während derer der Phasenregelkreis sich in einem gerasteten Zustand befindet, eine Verbesserung des Einrastverhaltens des Phasenregelkreises erzielt, indem die bei der Lösung gemäß des Standes der Technik auftretenden, sehr hohen Signalkomponenten unterdrückt werden. Diese Lösung erlaubt dennoch im eingerasteten Zustand die oben beschriebene Kompensation.

Eine weitere Ausgestaltung der Erfindung gemäß Anspruch 2 hat infolge der Amplitudenbegrenzung des Basisband-Videosignals zur Folge, dass für die Gewinnung des Kompensationssignals tatsächlich nur diejenigen Signalanteile berücksichtigt werden, die das Videosignal enthalten. Insbesondere in einem nicht gerasteten Zustand der PLL wird durch die Amplitudenbegrenzung erreicht, das störende Signalanteile in dem BasisbandSignal unterdrückt werden.

Die Schaltungsanordnung kann gemäß Anspruch 5 für die Verarbeitung von Videosignalen verschiedener Übertragungsnormen vorteilhaft durch einen schaltbaren Polaritätsinverter ergänzt werden, der die verschiedenen Modulationsarten kompensiert.

Nachfolgend werden zwei Ausführungsbeispiele der Erfindung anhand der Zeichnung näher erläutert. Es zeigen:
Fig. 1 ein erstes Ausführungsbeispiel der erfindungsgemäßen Schaltungsanordnung mit einem Dämpfungskondensator und einem elektronischen Schalter und
Fig. 2 ein zweites Ausführungsbeispiel der erfindungsgemäßen Schaltungsanordnung mit einem Amplitudenbegrenzer und einem Polaritätsinverter.

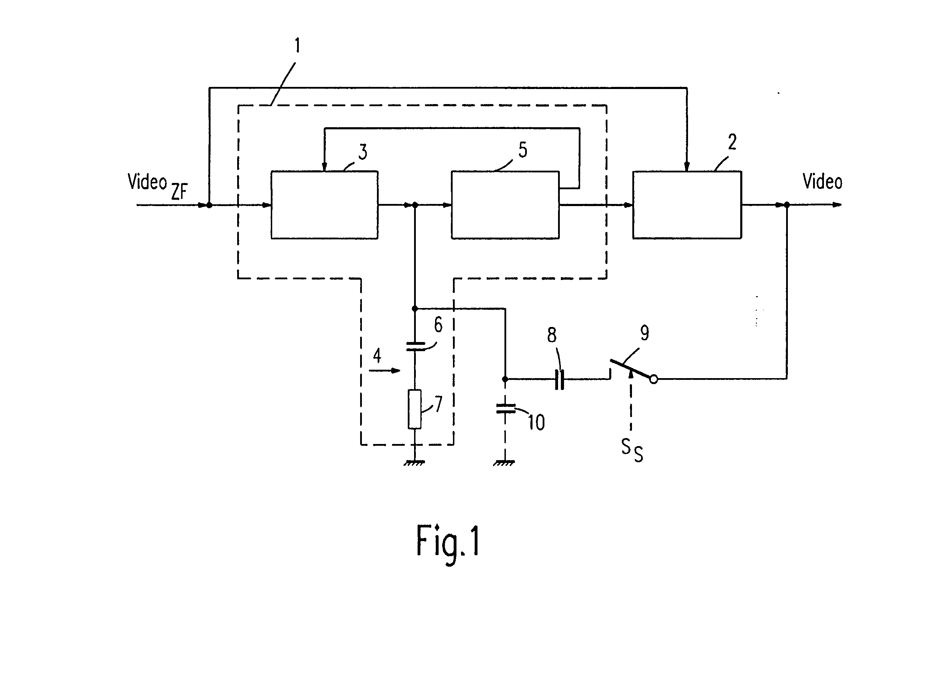

Ein in Fig. 1 in Form eines Blockschaltbildes dargestelltes erstes Ausführungsbeispiel der Erfindung zeigt einen Phasenregelkreis 1 sowie einen Video-Demodulator 2.

Der Phasenregelkreis 1 weist einen Phasendetektor 3 auf, dem an einem Eingang ein Zwischenfrequenz-Videosignal zugeführt wird. Der Phasendetektor 3 liefert ausgangsseitig ein Korrektursignal, welches auf ein Schleifenfilter 4 gekoppelt ist, das aus einer Reihenschaltung einer Kapazität 6 und eines Widerstandes 7 aufgebaut ist. Der Widerstand 7 ist gegen ein Bezugspotential gekoppelt.

Dem Schleifenfilter 4 ist ein spannungsgesteuerter Oszillator 5 nachgeschaltet, dessen Ausgangssignal einerseits einem zweiten Eingang des Phasendetektors 3 und andererseits dem Videodemodulator 2 zugeführt wird.

Dem Videodemodulator 2 wird ferner das Zwischenfrequenz-Videosignal zur Demodulation zugeführt. Der Video-Demodulator 2 liefert ausgangsseitig dieses Videosignal in Basisbandlage, jedoch in invertierter Form.

Nach dem Stande der Technik bekannte Schaltungsanordnungen beschränken sich auf diese Schaltungselemente. Hierbei tritt jedoch das Problem auf, daß in dem Zwischenfrequenz-Videosignal infolge der Generierung dieses Signals mittels einer Nyquist-Flanke enthaltene Phasenstörungen sich in dem Phasenregelkreis 1 fortpflanzen und zu einem phasengestörten Signal des spannungsgesteuerten Oszillators 5 führen, so daß auch die Video-Demodulation in dem Video-Demodulator 2 gestört ist und in dem Basisband-Videosignal Nichtlinearitäten auftreten.

Tritt beispielsweise in dem Zwischenfrequenz-Videosignal ein kosinusförmiger Bildinhalt auf, so tritt in der Trägerfrequenz des Zwischenfrequenz-Videosignals wegen der Nyquistflanke eine Phasenmodulation auf. Diese Phasenmodulation tritt am Ausgang des Phasendetektors 3, also in dessen Steuersignal mit veränderter Phasenlage, nämlich sinusförmig, auf. Damit enthält dieses Steuersignal, das auf den spannungsgesteuerten Oszillator 5 gekoppelt wird, eine sinusförmige Störung, die zu einer entsprechenden Nachregelung des spannungsgesteuerten Oszillators 2 führt.

Zur Vermeidung dieser Störeffekte weist die erfindungsgemäße Schaltungsanordnung einen Rückkoppelkondensator 8 auf, der auf den Eingang des Schleifenfilters 4 gekoppelt ist. Es sind ferner optional ein elektronisch gesteuerter Schalter 9 sowie eine weitere Kapazität 10 vorgesehen, welche als Dämpfungskapazität am Eingang des Schleifenfilters 4 gegen das Bezugspotential gekoppelt ist.

Über die Rückführungskapazität 8 wird das Basiband-Videosignal, das gegenüber dem Zwischenfrequenz-Videosignal bezüglich des Bildinhaltes in invertierter Form vorliegt, auf den Eingang des Schleifenfilters rückgekoppelt. Es überlagert sich dort mit dem Ausgangssignal des Phasensdetektors 3.

In dem oben beschriebenen Beispiel, in dem das Zwischenfrequenz-Videosignal kosinusförmigen Bildinhalt hatte, liegt also das Basisband-Videosignal, das der Video-Demodulator 2 ausgangsseitig liefert, in minus kosinusförmiger Phasenlage vor. Durch die Rückkopplung dieses Signals über den Rückführungskondensator 8 wird dieses Signal einer Phasenverschiebung von 90° unterzogen, so daß es am Eingang des Schleifenfilters 4 mit einer minus sinusförmigen Phasenlage eingekoppelt wird.

Der oben beschriebene kosinusförmige Bildinhalt des Zwischenfrequenz-Videosignals führt am Ausgang des Phasendetektors infolge der Nyquistflanke zu einer sinusförmigen Störanregung des Ausgangssignals des Phasendetektors 3. Die Störanregung, die in dem

Ausgangssignal des Phasendetektors 3 enthalten ist, ist damit genau gegenphasig zu dem Signal, das der Rückkopplungs-Kondensator 8 liefert. Bei entsprechender Dimensionierung der Schaltung können diese Signale auch so ausgelegt werden, daß sie etwa gleiche Amplitude, jedoch mit entgegengesetztem Vorzeichen, aufweisen. Damit gelingt es, die in dem Ausgangssignal des Phasendetektors 3 enthaltenen, auf oben beschriebene Weise entstandenen Störkomponenten mittels des über den Rückführungskondensator 8 gewonnenen Signals zu kompensieren. Im Ergebnis wird damit erreicht, daß die durch die Phasenmodulation des Bildträgers infolge der Nyquist-Flanke entstandene Phasenmodulation des Bildträgers vollständig kompensiert wird, so daß am Eingang des spannungsgesteuertenOszillators 5ein Signal zur Verfügung steht, das durch diese Störkomponenten nicht mehr beeinflußt ist. Damit wird der VCO in idealer Weise in Abhängigkeit der Zwischenfrequenz nachgeführt, ohne daß die in der Trägerfrequenz des Zwischenfrequenz-Signals enthaltenen Phasenstörungen den spannungsgesteuerten Oszillator 5 beeinflussen. Damit liefert der spannungsgesteuerte Oszillator 5 ein von diesen Phasenstörungen unbeeinflußtes Signal, so daß mittels des Video-Demodulators 2 eine Umsetzung des Videosignals in das Basisband gelingt, ohne daß diese Phasenstörungen Nichtlinearitäten verursachen.

Die Gewinnung des Kompensationssignals mittels des Rückführungskondensators 8 kann vorteilhaft nur dann vorgenommen werden, wenn der Phasenregelkreis 1 sich in einem gerasteten Zustand befindet, wenn also eine Zwischenfrequenz eines Zwischenfrequenz-Videosignals erkannt wurde und der Phasenregelkreis sich auf diese Frequenz eingerastet hat. Während derjenigen Zeiten, in denen dies nicht der Fall ist, beispielsweise bei einem Sendersuchlauf, kann der elektronische Schalter 9 vorteilhaft geöffnet werden. Damit wird eine Rückführung beliebiger Signalanteile, die der Video-Demodulator 2 während solcher Zeiten liefert, unterdrückt werden, so daß das Einrastverhalten des Phasenregelkreises 1 durch den Rückführungskondensator 8 bzw. des durch diesen gelieferten Signal nicht negativ beeinflußt wird.

Der Rückführungskondensator 8 liefert aufgrund seiner Eigenschaften als Kapazität einen zu hohen Frequenzen hin ansteigendes Signal. Dies wird durch den Dämpfungskondensator 10, der ebenfalls zu höheren Frequenzen hin niederohmiger wird, kompensiert. Durch diesen Dämpfungskondensator werden die hohen Frequenzen gegen das Bezugspotential gekoppelt, so daß der Frequenzanstieg in dem von dem Rückführungskondensator 8 gelieferten Signal kompensiert wird. Damit wird erreicht, daß die Amplitude des Kompensationssignals, das in das Schleifenfilter 4 eingespeist wird, etwa den gleichen Frequenzverlauf hat, wie die sinusförmige Störanregung am Ausgang des Phasendetektors. Damit wird die Kompensation der Störungen in dem Ausgangssignal des Phasendetektors 3 weiter verbessert.

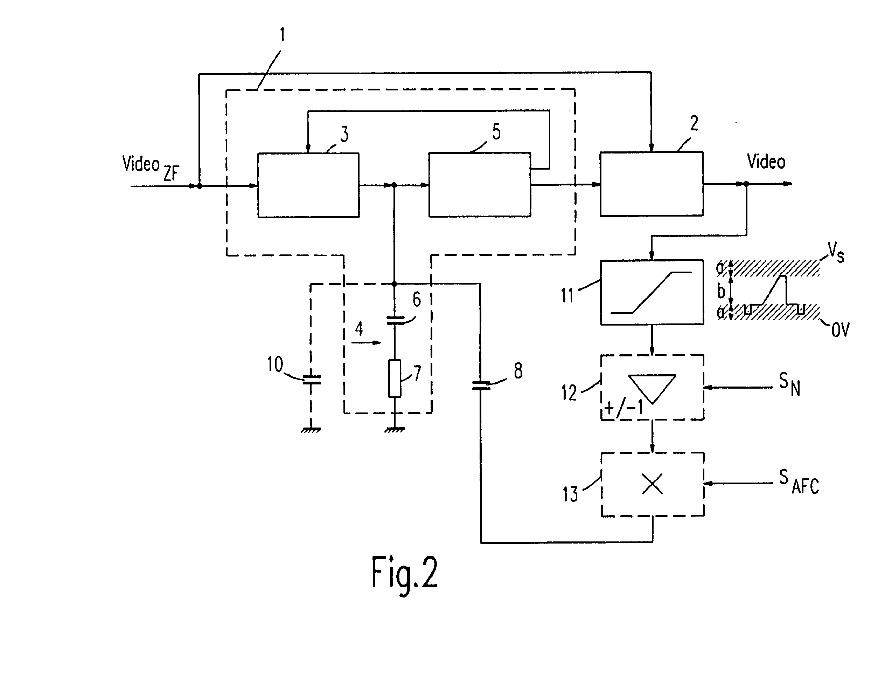

Fig. 2 zeigt ein zweites Ausführungsbeispiel der erfindungsgemäßen Schaltungsanordnung, welches gegenüber der Schaltungsanrodnung gemäß des ersten Ausführungsbeispiels gemäß Fig. 1 bezüglich des Phasenregelkreises 1, des Phasendetektors 3, des Schleifenfilters 4, des spannungsgesteuerten Oszillators 5, des Video-Demodulators 2, des Rückführungskondensators 8 sowie des Dämpfungskondensators 10 in identischer Weise aufgebaut ist.

Gegenüber dem ersten Ausführungsbeispiel gemäß Fig. 1 entfällt jedoch der elektronisch Schalter 9. Statt dessen wird das Ausgangssignal des Video-Demodulators 2 einem Amplitudenbegrenzer 11 zugeführt, der dieses Signal auf Amplitudenbereiche begrenzt, die in dem Videosignal vorkommen. Es werden also die extrem Amplitudenbereiche entsprechend einem Bildsignalinhalt mit dem Pegel weiß und einem Bildsignalinhalt mit dem Pegel schwarz als Grenzen herangezogen. Alle Signalwerte außerhalb dieser Grenzen werden durch den Amplitudenbegrenzer unterdrückt. Damit wird erreicht, daß zur Gewinnung des Kompensationssignals nur Signalanteile herangezogen werden, die in dem Aussteuerungsbereich des Videosignals auftreten. Insbesondere im nicht gerasteten Zustand des Phasenregelkreises 1 werden auf diese Weise dann in dem Basisband-Videosignal auftretende beliebige Amplituden unterdrückt. Damit wird insbesondere das Einrastverhalten des Phasenregelkreises 1 verbessert.

Gegebenenfalls könnte das Ausgangssignal des Amplitudenbegrenzers 11 unmittelbar der Rückführungskapazität 8 zugeführt werden.

In dem Ausführungsbeispiel gemäß Fig. 2 ist zur Verarbeitung von Videosignalen verschiedener Übertragungsnormen ein Polaritätsinverter 12 vorgesehen, welcher abhängig von der Modulationsart des Videosignals auf eine Invertierung des Signals schaltbar ist.
Damit wird auch bei verschiedenen Modulationsarten des Videosignals die oben beschriebene richtige Phasenlage des Kompensationssignals erzielt. Der Polaritätsinverter 12 wird mittels eines Schaltsignals S_{N} gesteuert, das beispielsweise aus einer Übertragungsnormerkennung eines in der Figur im übrigen nicht dargestellten Fernsehempfängers gewonnen werden kann.

Das Ausgangssignal des Polaritätsinverter 12 könnte gegebenenfalls unmittelbar der Rückführungskapazität 8 zugeführt werden.

In dem Ausführungsbeispiel gemäß Fig. 2 ist jedoch dem Polaritätsinverter 12 eine Amplitudendämpfung 13 nachgeschaltet, welche in Abhängigkeit eines AFC-Signals eines nicht dargestellten AFC-Detektors das Ausgangssignal des Amplitudenbegrenzers 11 reduziert. Das AFC-Signal dient in Tunern dazu, eine Frequenznachsteuerung vorzunehmen. Aus dem AFC-Signal kann Rückschluß darauf gezogen werden, ob der Tuner auf ein Eingangssignal richtig abgestimmt ist. Ist dies der Fall, so wird die steuerbare Amplitudendämpfung 13 auf ein Übertragungsmaß von "1" gestellt und damit das Basisband-Videosignal in amplitudenbegrenzter Form ohne Signalverlust auf den Rückführungskondensator 8 geschaltet, so daß das amplitudenrichtige Kompensationssignal erzeugt wird. Ist der Tuner hingegen nicht richtig auf ein Eingangssignal abgestimmt, so befindet man sich auf einem anderen Punkt der Nyquistflanke und erhält damit verbunden eine andere Intensität der Phasenstörung. Um der veränderten Phasenstörung Rechnung zu tragen, wird das Kompensationssignal verringert. Sobald das Steuersignal S_{AFC}, das aus dem AFC-Detektor generiert wird, wird eine perfekte Abstimmung signalisiert, wird das amplitudenbegrenzte Signal ungedämpft durchgeschaltet und es findet die oben beschriebene Kompensation statt.

Beiden Ausführungsbeispielen gemäß den Fig. 1 und 2 ist gemeinsam, daß die Kompensation von Störungen im Ausgangssignal des Phasendetektors 3, die durch Phasenmodulation des Trägers des Zwischenfrequenz-Videosignals verursacht werden, durch das Kompensationssignal gelingt, welches aus dem invertierten Basisband-Videosignal mittels des Rückführungskondensators 8 gewonnen und auf das Schleifenfilter 4 eingekoppelt wird. Es können darüber hinaus zur Verbesserung des Verhaltens der Schaltungsanordnung der elektronische Schalter 9, der Dämpfungskondensator 10 und die Amplitudenbegrenzerschaltung 11 vorgesehen sein. Es ist auch eine Kombination dieser zusätzlichen Elemente möglich. Der Polaritätsinverter 12 und die steuerbare Amplitudendämpfung 13 des Ausführungsbeispiels gemäß Fig. 2 sind ebenfalls in dem Ausführungsbeispiel gemäß Fig. 1 einsetzbar

## Patentansprüche

1. Schaltungsanordnung zur Demodulation eines unter Einsatz einer Nyquist-Flanke generierten Zwischenfrequenz-Videosignals mit einem einen Phasendetektor (3), ein Schleifenfilter (4) und einen spannungsgesteuerten Oszillator (5) aufweisenden Phasenregelkreis (1) und einem Video-Demodulator (2), wobei das Zwischenfrequenz-Videosignal dem Phasendetektor (3) zugeführt wird und das Ausgangssignal des Phasenregelkreises (1) dem Videodemodulator (2) zugeführt wird, welcher das Zwischenfrequenz-Videosignal in ein Basisband-Videosignal umsetzt, wobei
- der Phasenkomparator (3) im Aussteuerungsbereich des Zwischenfrequenz-Videosignals näherungsweise modulationsunabhängig arbeitet,
- das Basisband-Videosignal gegenüber dem Zwischenfrequenz-Videosignal in invertierter Form vorliegt,
**dadurch gekennzeichnet,**
**dass** aus dem Basisband-Videosignal mittels wenigstens eines Rückführungskondensators (8) ein Korrektursignal abgeleitet wird, das in dem Zwischenfrequenz-Videosignal enthaltene, durch die Nyquist-Flanke verursachte Signalanteile mit entgegengesetzter Amplitude und Phasenlage enthält und welches auf das Schleifenfilter (4) gekoppelt wird, dass das Korrektursignal ausschließlich während solcher Zeiten mittels eines elektronischen Schalters (9) auf das Schleifenfilter (4) gekoppelt wird, während derer der Phasenregelkreis (1) sich in einem gerasteten Zustand befindet und dass ein Dämpfungskondensator (10) vorgesehen ist, welcher das von dem Rückführungskondensator (8) gelieferte Signal gegen ein Bezugspotential koppelt.

2. Schaltungsanordnung nach Anspruch 1,
**dadurch gekennzeichnet,**
**dass** das Basisband-Videosignal vor dessen Kopplung auf den Rückführungskondensator (8) einem Amplitudenbegrenzer (11) zugeführt wird, welcher das Signal auf einen Amplitudenbereich zwischen Signalinhalten "weiß" und "schwarz" zugeordneten Videosignalamplituden begrenzt.

3. Schaltungsanordnung nach Anspruch 1,
**dadurch gekennzeichnet,**
**dass** der Video-Demodulator (2) das Basisband-Videosignal in gegenüber dem Zwischenfrequenz-Videosignal invertierter Form liefert.

4. Schaltungsanordnung nach Anspruch 1,
**dadurch gekennzeichnet,**
**dass** das Schleifenfilter (4) eine Reihenschaltung einer Kapazität (6) und eines Widerstandes (7) aufweist, welcher gegen ein Bezugspotential geschaltet ist, und dass das Korrektursignal auf die Kapazität (6) gekoppelt wird.

5. Schaltungsanordnung nach Anspruch 2,
**dadurch gekennzeichnet,**
**dass** das von dem Amplitudenbegrenzer (11) gelieferte Signal einem schaltbaren Polaritätsinverter (12) zugeführt wird, welcher in Abhängigkeit der Übertragungsnorm des Zwischenfrequenz-Videosignals schaltbar ist.

6. Schaltungsanordnung nach Anspruch 2,
**dadurch gekennzeichnet,**
**dass** das Korrektursignal mittels einer steuerbaren Amplitudendämpfung (13) in Abhängigkeit eines AFC-Signals eines AFC-Detektors steuerbar ist.

7. Schaltungsanordnung nach Anspruch 1,
**dadurch gekennzeichnet,**
**dass** sowohl der Dämpfungskondensator (10) wie auch der elektronische Schalter (9) vorgesehen sind.

8. Schaltungsanordnung nach Anspruch 2,
**dadurch gekennzeichnet,**
**dass** sowohl der Amplitudenbegrenzer (11) wie auch der Dämpfungskondensator (10) vorgesehen sind.

## Claims

1. A circuit arrangement for demodulating an intermediate-frequency video signal generated while using a Nyquist edge, comprising a phase-locked loop (1) including a phase detector (3), a loop filter (4) and a voltage-controlled oscillator (5), and a video demodulator (2), the intermediate-frequency video signal being applied to the phase detector (3) and the output signal of the phase-locked loop (1) being applied to the video demodulator (2), which converts the intermediate-frequency video signal into a baseband video signal, in which
- the phase comparator (3) operates, by approximation, independently of modulation in the control range of the intermediate-frequency video signal,
- the baseband video signal is present in an inverted form with respect to the intermediate-frequency video signal, **characterized**
**in that** a correction signal is derived from the baseband video signal by means of at least a feedback capacitor (8), which correction signal comprises signal components of opposite amplitude and phase position comprised in the intermediate-frequency video signal and caused by the Nyquist edge, and is applied to the loop filter (4),
**in that** the correction signal is exclusively coupled to the loop filter (4) by means of an electronic switch (9) only during those periods when the phase-locked loop (1) is in a locked-in state and
**in that** an attenuation capacitor (10) is provided, which couples the signal supplied by the feedback capacitor (8) to a reference potential.

2. A circuit arrangement as claimed in claim 1, **characterized in that** the baseband video signal is applied to an amplitude limiter (11) before it is coupled to the feedback capacitor (8), which amplitude limiter (11) limits the signal to an amplitude range between video signal amplitudes assigned to "white" and "black" signal contents.

3. A circuit arrangement as claimed in claim 1, **characterized in that** the video demodulator (2) supplies the baseband video signal in an inverted form with respect to the intermediate-frequency video signal.

4. A circuit arrangement as claimed in claim 1, **characterized in that** the loop filter (4) comprises a series arrangement of a capacitance (6) and a resistor (7) which is coupled to a reference potential, and **in that** the correction signal is applied to the capacitance (6).

5. A circuit arrangement as claimed in claim 2, **characterized in that** the signal supplied by the amplitude limiter (11) is applied to a switchable polarity inverter (12) which is switchable in dependence upon the transmission standard of the intermediate-frequency video signal.

6. A circuit arrangement as claimed in claim 2, **characterized in that** the correction signal is controllable by means of a controllable amplitude attenuator (13) in dependence upon an AFC signal from an AFC detector.

7. A circuit arrangement as claimed in claim 1, **characterized in that** both the attenuation capacitor (10) and the electronic switch (9) are provided.

8. A circuit arrangement as claimed in claim 2, **characterized in that** both the amplitude limiter (11) and the attenuation capacitor (10) are provided.

## Revendications

1. Circuit de démodulation d'un signal vidéo à fréquence intermédiaire généré lors de l'utilisation d'un flanc de Nyquist avec un circuit de régulation (1) de phases comportant un détecteur de phase (3), un filtre de boucle (4) et un oscillateur (5) commandé en tension et avec un démodulateur vidéo (2), le signal vidéo à fréquence intermédiaire étant amené au détecteur de phases (3) et le signal de sortie du circuit de régulation de phases (1) étant amené au démodulateur vidéo (2), lequel convertit le signal vidéo à fréquence intermédiaire en signal vidéo en bande de base, dans lequel
- le comparateur de phases (3) fonctionne indépendamment de la modulation dans la zone de modulation du signal vidéo à fréquence intermédiaire de façon approximative,
- le signal vidéo en bande de base est inversé par rapport au signal vidéo à fréquence intermédiaire,
**caractérisé en ce qu'**un signal de correction est dérivé du signal vidéo en bande de base au moyen d'au moins un condensateur de retour (8), lequel signal de correction contient les proportions de signaux provoquées par le flanc de Nyquist contenues dans le signal vidéo à fréquence intermédiaire avec une amplitude et une position de phase opposées et lequel signal de correction est couplé au filtre de boucle (4), **en ce que** le signal de correction est couplé uniquement pendant un certain temps au moyen d'un commutateur électronique (9) au filtre de boucle (4), temps pendant lequel le circuit de régulation de phases (1) est enclenché et **en ce qu'**un condensateur d'amortissement (10) est prévu, lequel couple le signal fourni par le condensateur de retour (8) par rapport à un potentiel de référence.

2. Circuit selon la revendication 1, **caractérisé en ce que** le signal vidéo en bande de base est amené à un limiteur d'amplitudes (11) avant son couplage au condensateur de retour (8), lequel limiteur limite le signal à une zone d'amplitude entre les amplitudes du signal vidéo attribuées aux contenus « blanc » et « noir » du signal.

3. Circuit selon la revendication 1, **caractérisé en ce que** le démodulateur vidéo (2) fournit le signal vidéo en bande de base dans une forme inversée par rapport au signal vidéo à fréquence intermédiaire.

4. Circuit selon la revendication 1, **caractérisé en ce que** le filtre de boucle (4) comporte un montage en série d'une capacité (6) et d'une résistance (7), lequel est connecté par rapport à un potentiel de référence, et **en ce que** le signal de correction est couplé à la capacité (6).

5. Circuit selon la revendication 2, **caractérisé en ce que** le signal fourni par le limiteur d'amplitudes (11) est introduit dans un inverseur de polarité (12) commutable, lequel peut être commuté en fonction de la norme de transmissions du signal vidéo à fréquence intermédiaire.

6. Circuit selon la revendication 2, **caractérisé en ce que** le signal de correction peut être commandé au moyen d'un amortissement d'amplitude (13) réglable en fonction d'un signal CAF d'un détecteur CAF.

7. Circuit selon la revendication 1, **caractérisé en ce que** le condensateur d'amortissement (10) ainsi que le commutateur électronique (9) sont prévus.

8. Circuit selon la revendication 2, **caractérisé en ce que** le limiteur d'amplitudes (11) ainsi que le condensateur d'amortissement (10) sont prévus.
